(19) **Europäisches Patentamt / European Patent Office / Office européen des brevets**

(11) **EP 1 947 585 A2**

(12) **EUROPEAN PATENT APPLICATION**

(43) Date of publication:
 **23.07.2008 Bulletin 2008/30**

(51) Int Cl.:
 ***G06F 21/00*** (2006.01)

(21) Application number: **07123848.9**

(22) Date of filing: **20.12.2007**

(84) Designated Contracting States:
 **AT BE BG CH CY CZ DE DK EE ES FI FR GB GR HU IE IS IT LI LT LU LV MC MT NL PL PT RO SE SI SK TR**
 Designated Extension States:
 **AL BA HR MK RS**

(30) Priority: **22.01.2007 KR 20070006627**

(71) Applicant: **Samsung Electronics Co., Ltd.**
 **Suwon-si,**
 **Gyeonggi-do 442-742 (KR)**

(72) Inventor: **Koh, Kwang-hyun**
 **Seoul (KR)**

(74) Representative: **Davies, Robert Ean**
 **Appleyard Lees**
 **15 Clare Road**
 **Halifax HX1 2HY (GB)**

(54) **Video processing apparatus and control method thereof, and electronic apparatus and control method thereof**

(57)   A video processing apparatus and method of operation are provided. The video processing apparatus includes: a video processing part (110) which performs a video processing of a video signal and allows to display a video based on the video signal; a storing part (120) which stores a control program (121) related to the video processing of the video processing part; a receiving part (130) which receives an encrypted updating program (122) for updating the control program which is stored in the storing part; and a control part (140) which updates the control program based on an updating program which is obtained by decrypting the encrypted updating program which is received by the receiving part by a unit of a piece of predetermined size.

FIG. 2

EP 1 947 585 A2

**Description**

Apparatuses and methods consistent with the present invention relate to a video processing apparatus and a control method thereof, and more particularly to an electronic apparatus and a control method thereof for updating software.

In general, an electronic apparatus including a video processing apparatus such as a television (TV) may be configured by a hardware such as a central processing unit (CPU), a read only memory (RAM), etc., and a software enabling the hardware to perform an operation. The software includes an operating system for managing an entire operation of the video processing apparatus, and an application program enabling a user to perform a specific function with the support of the operating system. Hereinafter, the software of the electronic apparatus will be referred to as a 'control program.'

The control program of the electronic apparatus may be updated. For example, the electronic apparatus receives a program for updating the control program (hereinafter, referred to as an 'updating program') from an external source, and updates the control program based on the received updating program.

An updating program receiving method includes a method for remotely receiving the updating program by using a broadcasting signal, a network, etc., and a method for connecting a portable storage medium such as a universal serial bus (USB) memory, etc. storing the updating program to the electronic apparatus to directly receive the updating program from the portable storage medium.

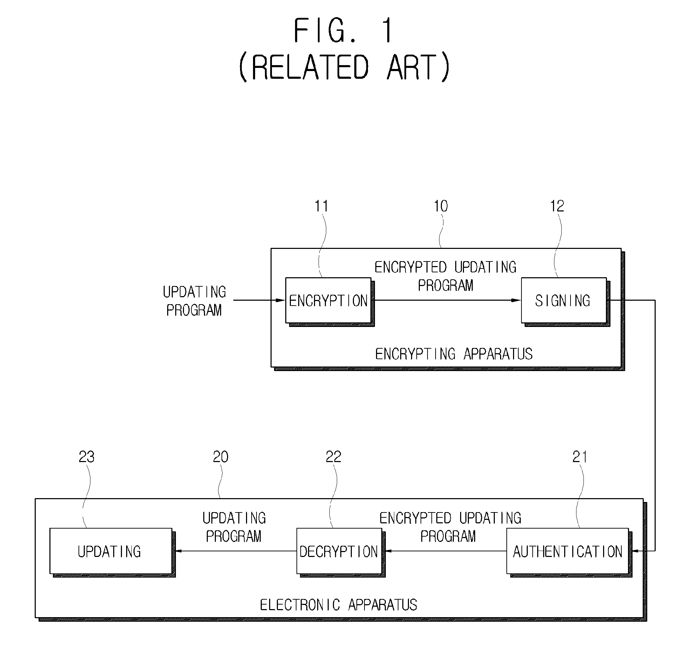

The updating program may be encrypted in transmitting the updating program for security. Here, the electronic apparatus decrypts an encrypted updating program to perform updating. FIG. 1 is an example of encrypting and decrypting processes of an updating program according to a related art electronic apparatus.

At first, an encrypting apparatus 10 performs encryption 11 of an updating program depending on a predetermined algorithm to generate an encrypted updating program. In this instance, the updating program may be an upgrade image of a control program.

Then, signing 12 is performed to the encrypted updating program for reinforcing security.

Next, the encrypting apparatus 10 transmits the encrypted updating program to an electronic apparatus 20. A transmitting medium of the updating program includes the broadcasting signal, the network, the portable storage media, etc., as described above.

The electronic apparatus 20 receives the transmitted encrypted updating program, and performs authentication 21 for verifying a subject body which transmits the updating program.

The electronic apparatus 20 then performs decryption 22 corresponding to an encryption algorithm with respect to the encrypted updating program to obtain an updating program. The electronic apparatus 20 also performs updating 23 of a control program based on the obtained updating program.

Recently, as the function of the electronic apparatus improves, the size of the updating program increases. Accordingly, the capacity of the hardware of the electronic apparatus, and especially a memory capacity necessary to decrypt the updating program, increases.

Also, if performance of the hardware of the electronic apparatus is incapable of supporting the increase of the size of the updating program, it takes a long time to decrypt the updating program.

Exemplary embodiments of the present invention aim to overcome the above disadvantages and other disadvantages not described above. Also, embodiments of the present invention are not required to overcome the disadvantages described above, and an exemplary embodiment of the present invention may not overcome any of the problems described above.

Accordingly, it is an aim of embodiments of the present invention to provide a video processing apparatus and a control method thereof, and an electronic apparatus and a control method thereof minimizing memory capacity needed to decrypt an encrypted updating program irrespective of the size of an updating program.

Another aim of embodiments of the present invention is to provide a video processing apparatus and a control method thereof, and an electronic apparatus and a control method thereof minimizing time necessary to decrypt an encrypted updating program.

Additional aspects of the present invention will be set forth in part in the description which follows and, in part, will be obvious from the description, or may be learned by practice of the present invention.

According to an aspect of the present invention, there is provided a video processing apparatus comprising: a video processing part which performs video processing of a video signal and displays a video based on the video signal; a storing part which stores a control program related to the video processing of the video processing part; a receiving part which receives an encrypted updating program for updating the control program which is stored in the storing part; and a control part which updates the control program based on an updating program which is obtained by decrypting the encrypted updating program which is received by the receiving part by a unit of a piece of predetermined size.

Preferably the control part may selectively perform decryption with respect to the each piece.

Preferably the control part may determine whether to decrypt a certain piece depending on a specific bit value of a piece which is previously decrypted.

Preferably the control part may also determine whether to decrypt a certain piece depending on a specific byte value of a piece which is previously decrypted being greater than a predetermined reference value.

Preferably value Cd(X) is determined by the following Equation: $Cd(X)=F(Q(X-Y))$, where, Cd(X) represents whether to decrypt the Xth piece of the plurality of pieces or not; the decryption is not performed if Cd(X) is 0; the decryption is performed if Cd(X) is 1; Cd(1)=1; X=2, 3,..., M-1, or M; Y is an integer greater than 1; value Q(X-Y) represents the (X-Y)th piece; and F(Q(X-Y)) is a function having the value of 0 or 1 depending on property of Q(X-Y).

Preferably the updating program obtained by decryption may comprise an upgrade image of the control program, and the control part stores a plurality of pieces decrypted in the storing part in a sequential order.

Preferably the receiving part may receive the encrypted updating program from one of a broadcasting signal transmitting apparatus, an updating server and a portable storage medium.

According to another aspect of the present invention, there is provided a control method of a video processing apparatus, the method comprising: decrypting an encrypted updating program which is received by a receiving part by a unit of a piece of a predetermined size; and updating a control program which is stored in a storing part based on the updating program which is obtained by the decrypting.

Preferably the decrypting may comprise selectively decrypting with respect to each piece.

Preferably the decrypting may comprise determining whether to decrypt a certain piece depending on a specific bit value of a piece which is previously decrypted.

Preferably the decrypting may comprise determining whether to decrypt a certain piece depending on a specific byte value of a piece which is previously decrypted being greater than a predetermined reference value.

Preferably value Cd(X) is determined by the following Equation: $Cd(X)=F(Q(X-Y))$, where, Cd(X) represents whether to decrypt the Xth piece of the plurality of pieces or not; the decryption is not performed if Cd(X) is 0; the decryption is performed if Cd(X) is 1; Cd(1)=1; X=2, 3,..., M-1, or M; Y is an integer greater than 1; value Q(X-Y) represents the (X-Y)th piece; and F(Q(X-Y)) is a function having the value of 0 or 1 depending on property of Q(X-Y).

Preferably the updating program obtained by the decrypting may comprise an upgrade image of the control program, and the decrypting may comprise storing a plurality of pieces decrypted in the storing part in a sequential order.

Preferably the encrypted updating program which is received by the receiving part may be received from one of a broadcasting signal transmitting apparatus, an updating server and a portable storage medium.

According to an aspect of the present invention, there is provided an electronic apparatus, comprising: a functioning part which performs at least one function; a storing part which comprises a storing space in which a control program related to the function which is performed by the functioning part is stored; a receiving part which receives the control program encrypted; and a control part which stores, in the storing part, the control program which is obtained by decrypting the encrypted control program which is received by the receiving part by a unit of plural pieces.

According to an aspect of the present invention, there is provided a control method of an electronic apparatus, the method comprising: decrypting the encrypted control program which is received by the receiving part by a unit of plural pieces; and storing the control program which is obtained by the decrypting in the storing part.

According to an aspect of the present invention, there is provided a method of encrypting an updating program for updating a control program of a video processing apparatus, the method comprising:

evaluating a property value of a first piece of an updating program;
encrypting said first piece; and
selectively encrypting each of a subsequent plurality of pieces of the updating program based on property values of previously encrypted pieces.

For a better understanding of the invention, and to show how embodiments of the same may be carried into effect, reference will now be made, by way of example, to the accompanying diagrammatic drawings in which:

FIG. 1 is an example of encrypting and decrypting processes of an updating program according to a related art electronic apparatus;
FIG. 2 is a block diagram illustrating a configuration of a video processing apparatus according to an exemplary embodiment of the present invention;
FIG. 3 is a flowchart illustrating an encrypting process of an updating program according to an exemplary embodiment of the present invention;
FIG. 4 illustrates a plurality of pieces of the updating program according to an exemplary embodiment of the present invention;
FIG. 5 is a flowchart illustrating a decrypting process of an encrypted updating program according to an exemplary embodiment of the present invention; and
FIG. 6 illustrates a plurality of pieces of the encrypted updating program according to an exemplary embodiment of the present invention.

Reference will now be made in detail to the exemplary embodiments of the present invention, which are illustrated in the accompanying drawings, wherein like reference numerals refer to like elements throughout. The exemplary embodiments are described below so as to explain the present invention by referring to the figures.

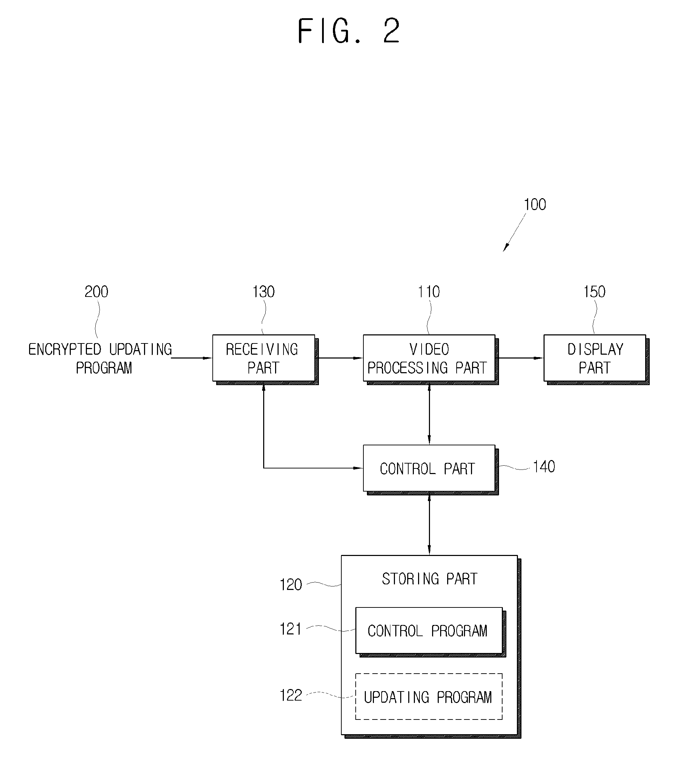

FIG. 2 is a block diagram illustrating a configuration of a video processing apparatus 100 according to an exemplary embodiment of the present invention. The video processing apparatus 100 may be embodied by a TV, a set-top box, etc., and performs a video processing of a video signal and displays a video based on the video signal.

As shown in FIG. 2, a video processing apparatus 100 executes a control program to perform an operation. The control program includes an operating system that manages an entire operation of the video processing apparatus 100, and an application program that enables a user to perform a specific function with the support of the operating system.

The control program of the video processing apparatus 100 may be updated. The video processing apparatus 100 receives an updating program for updating the control program from the outside, and updates the control program based on the received updating program.

The video processing apparatus 100 may remotely receive the updating program from a broadcasting signal transmitting apparatus (not shown) or an updating server (not shown) through a broadcasting signal or a network, or directly receive the updating program from a portable storage medium (not shown) such as a USB memory, etc. storing the updating program.

The updating program may be encrypted. The encryption of the updating program may be performed by the broadcasting signal transmitting apparatus or the updating server (hereinafter, referred to 'encrypting apparatus').

The encrypting apparatus sequentially encrypts the updating program of the video processing apparatus 100 by a unit of a piece of having a predetermined size. If the updating program has a size of several to several tens of Megabytes (MBs), the size of each piece may be several to several tens of kilobytes (kBs).

The encrypting apparatus may selectively perform encryption with respect to a plurality of pieces. Whether to encrypt or not with respect to a certain piece may be determined depending on a property of a piece previously encrypted (hereinafter, referred to 'previous piece') in encryption.

The property of the previous piece may be a specific bit value of the previous piece. For example, the property of the previous piece may be a bit value of the lowest position of the first byte of the previous piece.

Also, the property of the previous piece may be whether a specific byte value is greater than a predetermined reference value or not. For example, the property of the previous piece may be whether a first byte value is greater than 5 or not.

The value of the property of the previous piece may be represented as 0 or 1. If the value of the property of the previous piece is 0, encryption may not be performed, and if the value of the property of the previous piece is 1, encryption may be performed.

The value $Ce(X)$ represents whether to encrypt or not the Xth piece of a plurality of pieces to be encrypted. If $Ce(X)$ is 0, encryption is not performed, and if $Ce(X)$ is 1, encryption is performed. $Ce(1)=1$, and $Ce(X)$ may be determined by the following Equation 1.

Equation 1

$$Ce(X)=F(P(X-Y))$$

In this instance, $X=2, 3,..., M-1$, or $M$. Value $P(X-Y)$ represents an encrypted $(X-Y)$th piece. Function $F(P(X-Y))$ is a function having the value of 0 or 1 depending on property of $P(X-Y)$. For example, $F(P(X-Y))$ may be a specific bit value of $P(X-Y)$, or may be a value representing whether a specific byte value is greater than a predetermined reference value or not.

$M$ may be determined by the total number of pieces. For example, $Y$ may be 1, and, if encrypting with respect to a certain piece, the property of an immediately previous piece is referred to.

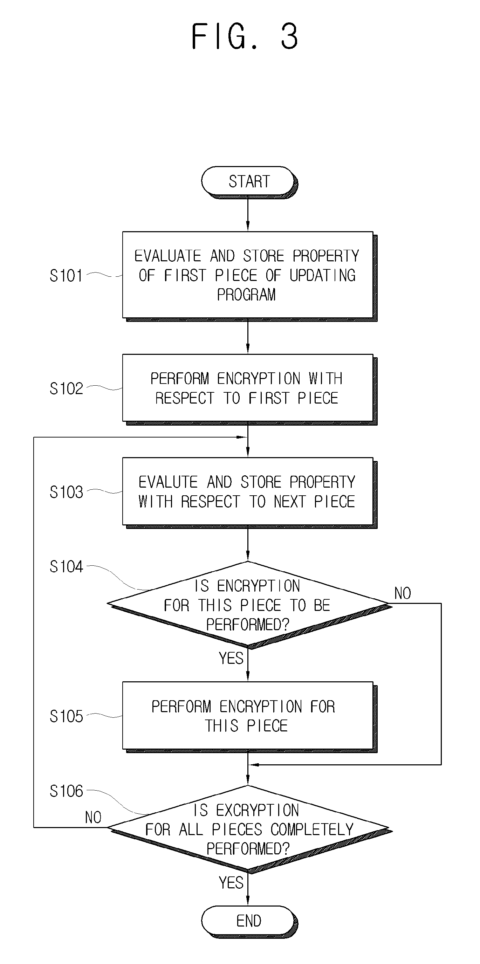

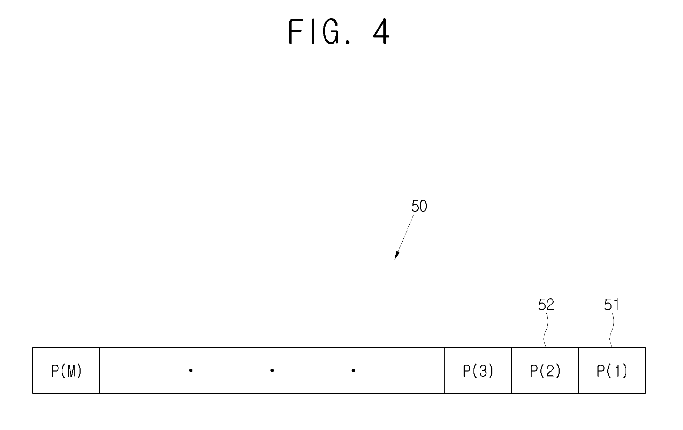

FIG. 3 is a flowchart illustrating an encrypting process of an updating program according to an exemplary embodiment of the present invention. FIG. 4 illustrates a plurality of pieces of the updating program according to an exemplary embodiment of the present invention.

Initially, the encrypting apparatus evaluates a property value of a first piece 51 shown in FIG. 4 of an updating program 50, and stores the evaluated property value (S101). In operation S101, a first piece of data of a predetermined size among a series of data pieces constituting the updating program 50 may be determined as the first piece 51. The first piece 51 has the property value of 0 or 1 depending on a property thereof.

Then, the encrypting apparatus performs encryption with respect to the first piece 51 (S102).

Next, the encrypting apparatus evaluates a property value with respect to the next piece, that is, a second piece 52 shown in FIG. 4, and stores the evaluated property value (S103). In operation S103, a data piece of a predetermined size next to the data piece corresponding to an encrypted piece among the series of data pieces constituting the updating program 50 may be determined as the second piece 52.

Then, the encrypting apparatus confirms whether to perform encryption of the second piece 52 or not (S104). In operation S104, whether to encrypt or not the second piece 52 may be determined depending on the property value of the stored first piece 51.

In operation S104, if the property value of the first piece 51 is 1, the encrypting apparatus performs encryption of the second piece 52 (S105). If the property value of the first piece 51 is 0, operation S105 is not performed, and operation S106 is entered.

The encrypting apparatus confirms whether all pieces of the updating program 50 are completely encrypted or not (S106).

In operation S106, if the encryption determination with respect to all pieces of the updating program 50 is not completed, the encrypting apparatus evaluates and stores the property value of the next piece (S103). Operations S104 to S106 are then performed again.

In operation S106, if the encryption determination with respect to all pieces of the updating program 50 is complete, the encrypting process is ended.

The encrypting apparatus may remotely transmit all pieces completely encrypted (hereinafter, referred to 'encrypted updating program') to the video processing apparatus 100 through a broadcasting signal or a network. The encrypting apparatus may perform signing before transmission for reinforcing security of the encrypted updating program.

The video processing apparatus 100 receives the encrypted updating program, and decrypts the received encrypted updating program to obtain an updating program. The video processing apparatus 100 performs decryption of the encrypted updating program in a unit of a piece of predetermined size when decrypting the encrypted updating program.

As shown in FIG. 2, the video processing apparatus 100 includes a video processing part 110 that performs a video processing of a video signal, a storing part 120 that stores a control program 121, a receiving part 130 that receives an encrypted updating program 200 for updating the control program 121, and a control part 140 that updates the control program 121 based on an updating program 122 obtained by decrypting the received encrypted updating program 200 using a piece of a predetermined size.

The video processing part 110 performs decoding, scaling, etc. with respect to a video signal. The video signal includes a broadcasting signal.

The storing part 120 may store the updating program 122 obtained by decrypting the encrypted updating program 200 as well as the control program 121. The storing part 120 may be exemplarily embodied by a flash memory as a nonvolatile memory.

The receiving part 130 receives the encrypted updating program 200 from the encrypting apparatus. The receiving part 130 may receive the encrypted updating program 200 through a broadcasting signal or a network. Also, the receiving part 130 may receive the encrypted updating program 200 from a portable storage medium (not shown) such as a USB, etc. The receiving part 130 may receive a video signal being received by the video processing part 110.

The control part 140 performs decryption with respect to the received encrypted updating program 200 in a unit of a piece of predetermined size in sequence, and updates the control program 121 based on the updating program 122 obtained thereby. The size of the decrypted piece is the same as the size of the piece determined in encrypting the encrypted updating program 200.

When receiving the encrypted updating program 200, the control part 140 may perform decryption with respect to a series of received data, in a unit of a piece of a determined size in sequence. Accordingly, if only a piece having a size smaller than the size of the complete encrypted updating program 200 is received, decryption of the piece can be readily performed, thereby reducing a memory capacity necessary for decryption.

The control part 140 may selectively perform decryption with respect to each piece. In this instance, whether to decrypt or not with respect to a certain piece may be determined depending on a property of a piece previously decrypted (hereinafter, referred to 'previous piece' like in the encryption).

The property of the previous piece in decryption is the same as the property of the previous piece determined in encryption. That is, the property of the previous piece may be a specific bit value of the previous piece, or a value representing whether a specific byte value is greater than a predetermined reference value or not.

In decryption, whether to perform decryption or not depending on the property value of the previous piece corresponds to the case of the encryption. For example, if encryption is not performed when the property value of the previous piece is 0 in encryption, decryption is not performed when the property value of the previous piece is 0 in decryption.

Value Cd(X) represents whether to decrypt or not the Xth piece of a plurality of pieces to be decoded. If Cd(X) is 0, decryption is not performed, and if Cd(X) is 1, decryption is performed. Cd(1)=1, and Cd(X) may be determined as the following Equation 2.

Equation 2

$$Cd(X) = F(Q(X-Y))$$

In this instance, X=2, 3,..., M-1, or M. Value Q (X-Y) represents a decrypted (X-Y)th piece. Function F(Q(X-Y)) is a function having the value of 0 or 1 depending on property of Q(X-Y), and is the same as function F(P(X-Y)) of the encryption. Also, M and Y are the same as the case of the encryption.

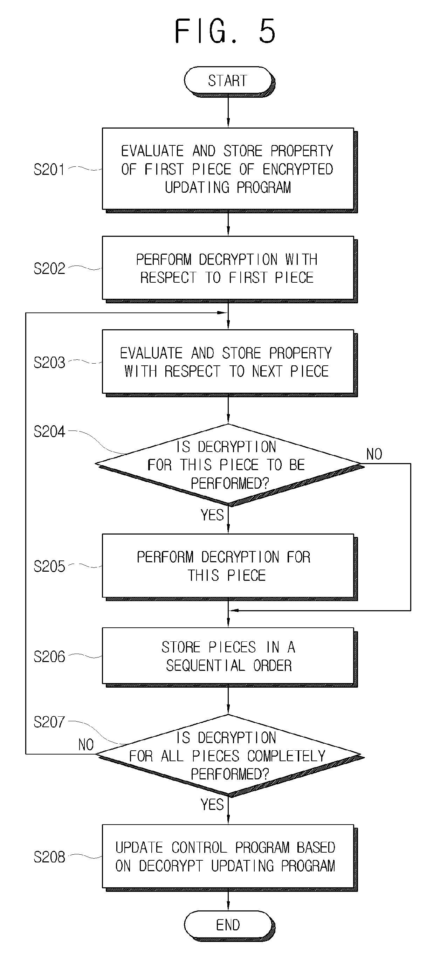

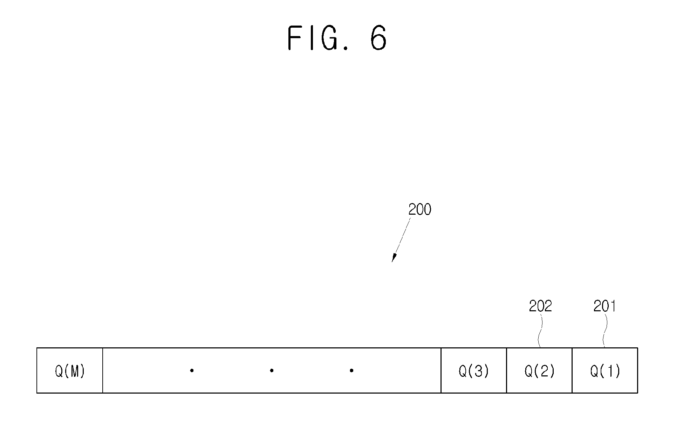

FIG. 5 is a flowchart illustrating a decrypting process of an encrypted updating program according to an exemplary embodiment of the present invention, and FIG. 6 illustrates a plurality of pieces of the encrypted updating program according to an exemplary embodiment of the present invention. At first, the control part 140 evaluates a property value of a first piece 201 shown in FIG. 6 among a series of data of an encrypted updating program 200 shown in FIG. 6, and stores the evaluated property value (S201).

Next, the control part 140 performs decryption with respect to the first piece 201 (S202). The algorithm used in decryption corresponds to algorithm used in encryption of the updating program.

Then, the control part 140 evaluates a property value with respect to the next piece, that is, a second piece 202 shown in FIG. 6, and stores the evaluated property value (S203) .

The control part 140 then confirms whether to perform decryption of the second piece 202 or not (S204). In operation S204, whether to decrypt or not the second piece 202 may be determined depending on the property value of the stored first piece 201.

In operation S204, if the property value of the first piece 201 is 1, the control part 140 performs decryption of the second piece 202 (S205). If the property value of the first piece 201 is 0, operation S205 is not performed, and operation S206 is entered.

Then, the control part 140 stores data of the piece performed in operation S204 or S205 in the storing part 120 in sequence (S206). The updating program may be an upgrade image of the control program 121.

Subsequently, the control part 140 confirms whether all pieces of the encrypted updating program 200 are completely decoded or not (S207).

In operation S207, if the decryption with respect to all pieces of the encrypted updating program 200 is not completed, the control part 140 evaluates and stores the property value of the next piece (S203). Operations S204 to S207 are repeated on the next piece.

In operation S207, if the decryption with respect to all pieces of the encrypted updating program 200 is completed, the control part 140 updates the control program 121 based on the updating program 122 obtained by storing all pieces in the storing part 120 in sequence (S208).

Accordingly, since decryption with respect to a plurality of pieces is selectively performed, time of decrypting an encrypted updating program can be minimized.

If signing is performed to the encrypted updating program 200, the control part 140 may additionally perform authentication with respect to the encrypted updating program 200 before decryption.

The control part 140 may include a hardware such as a CPU (not shown), a RAM (not shown), etc., and a software loaded to the RAM to be executed by the CPU. The software of the control part 140 is programmed so that the CPU can perform the operation of the control part 140. The control program 121 may be included in the software of the control part 140.

As shown in FIG. 2, the video processing apparatus 100 may further include a display part 150 displaying video based on a video signal processed by the video processing part 110. The display part 150 may display video by means of a liquid crystal display (LCD) type, a plasma display panel (PDP) type, etc.

The present invention may be exemplarily embodied by an electronic apparatuses such as a refrigerator, a washing machine and other consumer electronics in addition to the video processing apparatus 100 such as a TV. The electronic apparatus has the same decryption property as the video processing apparatus 100.

For example, the electronic apparatus includes a functioning part performing at least one function, a storing part having a storing space in which a control program related to a function performed by the functioning part is stored, a receiving part receiving the control program encrypted, and a control part storing, in the storing part, the control program obtained by performing decryption with respect to the encrypted control program received by the receiving part by a unit of plural pieces.

The functioning part of the electronic apparatus corresponds to the video processing part 110 of the video processing apparatus 100, and performs a function particular to the electronic apparatus such as refrigerating, washing, etc.

The storing part, the receiving part and the control part of the electronic apparatus respectively have configurations like the storing part 120, the receiving part 130 and the control part 140 of the video processing apparatus 100.

As described above, embodiments of the present invention provide a video processing apparatus and a control method thereof, and an electronic apparatus and a control method thereof minimizing memory capacity needed to decrypt an encrypted updating program irrespective of the size of an updating program.

Embodiments of the present invention provide a video processing apparatus and a control method thereof, and an electronic apparatus and a control method thereof minimizing time of decrypting an encrypted updating program.

Although a few exemplary embodiments of the present invention have been shown and described, it will be appreciated by those skilled in the art that changes may be made in these exemplary embodiments without departing from the principles and spirit of the invention, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A video processing apparatus, comprising:

   a video processing part (110) which performs video processing of a video signal and allows displaying of a video based on the video signal;
   a storing part (120) which stores a control program (121) for the video processing of the video processing part;
   a receiving part (130) which receives an encrypted updating program for updating the control program which is stored in the storing part; and
   a control part (140) which updates the control program based on an updating program which is obtained by decrypting the encrypted updating program which is received by the receiving part, in a unit of a piece of a predetermined size.

2. The video processing apparatus according to claim 1, wherein the control part (140) selectively performs decryption for each of a plurality of pieces of the encrypted updating program.

3. The video processing apparatus according to claim 2, wherein the control part (140) determines whether to decrypt a certain piece of the plurality of pieces depending on a specific bit value of a piece of the plurality of pieces which is previously decrypted.

4. The video processing apparatus according to claim 2, wherein the control part (140) determines whether to decrypt a certain piece of the plurality of pieces depending on a specific byte value of a piece of the plurality of pieces which is previously decrypted, being greater than a predetermined reference value.

5. The video processing apparatus according to any of claims 2-4, wherein Cd(X) is determined by the following Equation:

$$Cd(X) = F(Q(X-Y)),$$

where, Cd(X) represents a value indicating whether to decrypt Xth piece of the plurality of pieces or not;
the decryption is not performed if Cd(X) is 0;

the decryption is performed if Cd(X) is 1; Cd(1)=1;
X=2, 3,..., M-1, or M; and Y is an integer greater than 1;
Q(X-Y) represents (X-Y)th piece; and
F(Q(X-Y)) is a function having a value of 0 or 1 depending on a property of Q(X-Y).

6. The video processing apparatus according to any preceding claim, wherein the updating program obtained by decryption comprises an upgrade image of the control program, and
the control part stores in the storing part, a plurality of pieces decrypted in a sequential order.

7. The video processing apparatus according to any preceding claim, wherein the receiving part (130) receives the encrypted updating program from one of a broadcasting signal transmitting apparatus, an updating server and a portable storage medium.

8. A control method of a video processing apparatus, the method comprising:

decrypting (S202) an encrypted updating program which is received by a receiving part, in a unit of a piece of a predetermined size; and
updating (S208) a control program which is stored in a storing part based on an updating program which is obtained by the decrypting.

9. The control method of the video processing apparatus according to claim 8, wherein the decrypting comprises selectively decrypting each of a plurality of pieces of the encrypted updating program.

10. The control method of the video processing apparatus according to claim 9, wherein the decrypting comprises determining whether to decrypt a certain piece of the plurality of pieces depending on a specific bit value of a piece of the plurality of pieces which is previously decrypted.

11. The control method of the video processing apparatus according to claim 9, wherein the decrypting comprises determining whether to decrypt a certain piece of the plurality of pieces depending on a specific byte value of a piece of the plurality of pieces which is previously decrypted, being greater than a predetermined reference value.

12. The control method of the video processing apparatus according to claim 9, wherein Cd(X) is determined by the following Equation:

$$Cd(X)=F(Q(X-Y)),$$

where, Cd(X) represents a value indicating whether to decrypt Xth piece of the plurality of pieces or not;
the decryption is not performed if Cd(X) is 0;
the decryption is performed if Cd(X) is 1; Cd(1)=1;
X=2, 3,..., M-1, or M; and Y is an integer greater than 1;
Q(X-Y) represents (X-Y)th piece; and
F(Q(X-Y)) is a function having a value of 0 or 1 depending on a property of Q(X-Y).

13. The control method of the video processing apparatus according to any of claims 8-12, wherein the updating program obtained by the decrypting comprises an upgrade image of the control program, and
the decrypting comprises storing in a storing part, a plurality of pieces decrypted in a sequential order.

14. The control method of the video processing apparatus according to any of claims 8-13, wherein the encrypted updating program which is received by the receiving part is received from one of a broadcasting signal transmitting apparatus, an updating server and a portable storage medium.

15. An electronic apparatus, comprising:

a functioning part which performs at least one function;
a storing part (120) which comprises a storing space which stores a control program (121) for the at least one function which is performed by the functioning part;

a receiving part (130) which receives the control program encrypted; and
a control part (140) which stores, in the storing part, the control program which is obtained by decrypting the encrypted control program which is received by the receiving part, in a unit of plural pieces.

16. A control method of an electronic apparatus, the method comprising:

decrypting an encrypted control program which is received by the receiving part in a unit of plural pieces; and
storing the control program which is obtained by the decrypting in the storing part.

17. A method of encrypting an updating program for updating a control program of a video processing apparatus, the method comprising:

evaluating (S101) a property value of a first piece of an updating program;
encrypting (S102) said first piece; and
selectively encrypting (S105) each of a subsequent plurality of pieces of the updating program based on property values of previously encrypted pieces.

18. A method of encrypting an updating program according to claim 17, wherein the selective encrypting comprises determining (S104) whether to encrypt a certain piece of a plurality of pieces depending on a specific bit value of a piece of the plurality of pieces which is previously encrypted.

19. A method of encrypting an updating program according to claim 17, wherein the selective encrypting comprises determining whether to encrypt a certain piece of the plurality of pieces depending on a specific byte value of a piece of the plurality of pieces which is previously encrypted being greater than a predetermined reference value.

# FIG. 1
# (RELATED ART)

# FIG. 2

# FIG. 3

START

S101 — EVALUATE AND STORE PROPERTY OF FIRST PIECE OF UPDATING PROGRAM

S102 — PERFORM ENCRYPTION WITH RESPECT TO FIRST PIECE

S103 — EVALUTE AND STORE PROPERTY WITH RESPECT TO NEXT PIECE

S104 — IS ENCRYPTION FOR THIS PIECE TO BE PERFORMED?

NO

YES

S105 — PERFORM ENCRYPTION FOR THIS PIECE

S106 — IS EXCRYPTION FOR ALL PIECES COMPLETELY PERFORMED?

NO

YES

END

# FIG. 4

50

52    51

| P(M) | · · · | P(3) | P(2) | P(1) |

# FIG. 5

START

S201 — EVALUATE AND STORE PROPERTY OF FIRST PIECE OF ENCRYPTED UPDATING PROGRAM

S202 — PERFORM DECRYPTION WITH RESPECT TO FIRST PIECE

S203 — EVALUATE AND STORE PROPERTY WITH RESPECT TO NEXT PIECE

S204 — IS DECRYPTION FOR THIS PIECE TO BE PERFORMED?

NO

YES

S205 — PERFORM DECRYPTION FOR THIS PIECE

S206 — STORE PIECES IN A SEQUENTIAL ORDER

S207 — IS DECRYPTION FOR ALL PIECES COMPLETELY PERFORMED?

NO

YES

S208 — UPDATE CONTROL PROGRAM BASED ON DECORYPT UPDATING PROGRAM

END

# FIG. 6

200

202    201

| Q(M) | · · · | Q(3) | Q(2) | Q(1) |
|------|-------|------|------|------|